# EUROPÄISCHE PATENTANMELDUNG

(11) **EP 4 617 965 A1**
(43) Veröffentlichungstag der Anmeldung: **17.09.2025**
(21) Anmeldenummer: 24163153.0
(22) Anmeldetag: 13.03.2024
(51) Int. Cl.: G06Q 10/0631, G06Q 10/20, G06Q 50/08, E04C 3/00, E04B 2/00, G01N 33/00, E04B 1/02

(54) **SYSTEM ZUR AUSWAHL EINES VORGEFERTIGTEN WANDELEMENTS AUF GRUNDLAGE EINER ÜBERWACHTEN FUNKTIONALITÄT VERBAUTER VORGEFERTIGTER WANDELEMENTE**

(71) Anmelder: ecoworks GmbH, 10559 Berlin (DE)
(72) Erfinder: Heisenberg, Emanuel, 10559 Berlin (DE); Bindal-Gutsche, Christoph, 10559 Berlin (DE); Lileike, Björn, 10559 Berlin (DE); Salbert, Eric, 10559 Berlin (DE); Georgi, Martin, 10559 Berlin (DE); Stab, Axel, 10559 Berlin (DE); Karsten, Moritz, 10559 Berlin (DE)
(74) Vertreter: Frick, Robert

(57) **Zusammenfassung**

Die Erfindung betrifft ein System für die Auswahl von vorgefertigten Wandelementen im Rahmen serieller Sanierungen und basiert auf der Nutzung einer Datenbank und einer Recheneinheit. Die Datenbank speichert Informationen über die Funktionalität und Leistung verschiedener, bereits installierter Wandelemente, einschließlich Daten zu Standort, Energieverbrauch und spezifischen Konfigurationen dieser Elemente. Diese Informationen werden genutzt, um einen digitalen Zwilling eines potenziell zu sanierenden Gebäudes zu simulieren.

Die Recheneinheit verwendet die gespeicherten Daten, um für ein konkretes Sanierungsprojekt das optimale Wandelement zu ermitteln. Bei der Auswahl berücksichtigt sie relevante Gebäudedaten wie Standort und Ausrichtung, um eine bestmögliche Anpassung und Performance des gewählten Wandelements im Hinblick auf die spezifischen Anforderungen des zu sanierenden Gebäudes zu gewährleisten.

Dieser Ansatz ermöglicht eine datengestützte Entscheidungsfindung bei der Auswahl von Bauelementen für die Sanierung, die auf realen Leistungsdaten basiert. Dadurch können Effizienz und Wirksamkeit der Sanierungsmaßnahmen verbessert werden, indem die am besten geeigneten Materialien und Konstruktionen für jedes Projekt individuell ausgewählt werden.

## Beschreibung

Die vorliegende Erfindung betrifft ein System zur Auswahl eines vorgefertigten Wandelements auf Grundlage einer überwachten Funktionalität verbauter vorgefertigter Wandelemente.

Um das Ziel vieler Regierungen zu erreichen, Emissionen und Energieverbrauch umfassend zu reduzieren, ist eine gründliche Sanierung bestehender Gebäude unerlässlich. In Deutschland wird dies bereits erfolgreich durch die "serielle Sanierung" zu klimaneutralen Gebäuden, basierend auf den Prinzipien des Passivhaus-Standards, umgesetzt. Der Erfolg dieses Konzepts hängt maßgeblich von der Standardisierung der verwendeten Produkte und Verfahren ab. Da potenzielle Sanierungsobjekte aufgrund ihrer baulichen Gegebenheiten sehr unterschiedlich sind, ist die sorgfältige Auswahl des Sanierungsobjekts von hoher Wichtigkeit.

Problematisch im Stand der Technik ist, dass im heutigen Bauwesen, insbesondere bei der Durchführung von energetischen Sanierungen, Bestandteile von Gebäuden, in der Regel Wandelemente, häufig verbaut werden, ohne dass ihre bauphysikalischen Eigenschaften systematisch und kontinuierlich überwacht werden. Ebenso wird das Zusammenspiel dieser Wandelemente mit anderen Bauelementen des Gebäudes selten systematisch überprüft und optimiert. Dies bedeutet, dass sowohl bei Neubauten als auch bei Sanierungsprojekten oft eine regelmäßige Kontrolle und Anpassung unterbleibt, die sicherstellen würde, dass die Wandelemente optimal funktionieren und effizient in das Gesamtbaukonzept integriert sind.

Darüber hinaus ist hierbei nachteilhaft, dass dann auch Informationen fehlen, die die Sinnhaftigkeit einer Modernisierungsmaßnahme für ein bestehendes Gebäude angeben könnten. So ist es nicht möglich, automatisiert aus abgeschlossenen Sanierungsmaßnahmen abzuleiten, ob ähnliche oder leicht abgewandelte Sanierungsmaßnahmen auch für ein noch zu sanierendes Gebäude effektiv umzusetzen sind oder ob hierbei zu erwarten ist, dass die sich vormals als sinnhaft erwiesenen Sanierungsmaßnahmen bei einem potenziell zu sanierenden Gebäude als weniger effektiv herausstellen. Diese Informationen würden es auch vereinfachen, eine Auswahl zwischen einer Vielzahl von noch zu sanierenden Gebäuden zu treffen, bei welchen die Maßnahme des seriellen Sanierens unter Verwenden eines vorgefertigten Wandelements möglichst positive Ergebnissen erzielt.

Bei konventionellen Bauvorhaben nach dem Stand der Technik, in denen Wandelemente verbaut werden, fehlen Überwachungssysteme oder anderweitige Vorrichtungen zur Nachverfolgung der Leistungsfähigkeit der verbauten Wandelemente, was zur Folge hat, dass die tatsächliche Qualität der Wandelemente bspw. in Bezug auf die Dämmwirkung über die Produktlebensdauer hinweg weitestgehend unbekannt bleibt. Diese Situation führt dazu, dass mögliche Baumängel entweder gar nicht oder erst sehr spät erkannt werden. Zudem bleiben detaillierte bauphysikalische Informationen, die das Verhalten eines Wandelements über einen längeren Zeitraum erfassen, ungenutzt. Dies hat zur Folge, dass solche wertvollen Daten für die Weiterentwicklung und Optimierung der Produkte nicht zur Verfügung stehen.

Insbesondere angesichts der steigenden Anforderungen an hohe Dämmwerte und der stets variierenden Bausubstanz bei Sanierungsprojekten führt die fehlende systematische Überwachung und Datennutzung zu Baumängeln. Diese Situation trägt außerdem zu einer unnötig langsamen Innovation bei Produkten im Bauwesen bei. Jede Sanierung bringt eigene Herausforderungen mit sich, und ohne präzise Daten und kontinuierliche Überwachung können sich Schwachstellen bspw. in der Dämmleistung entwickeln, die sowohl die Effizienz als auch die Langlebigkeit der Baumaßnahmen beeinträchtigen und beim Durchführen einer Gebäudesanierung nicht berücksichtigt werden.

Um einige oder alle der oben beschriebenen Problem zu lösen oder zumindest abzumildern, schlägt die Erfindung ein System zur Auswahl eines vorgefertigten Wandelements auf Grundlage einer überwachten Funktionalität verbauter vorgefertigter Wandelemente zur Nutzung im Rahmen einer seriellen Sanierung vor.

Das erfindungsgemäße System zur Auswahl eines vorgefertigten Wandelements auf Grundlage einer überwachten Funktionalität verbauter vorgefertigter Wandelemente zur Nutzung im Rahmen einer seriellen Sanierung umfasst eine Datenbank, in welcher die Funktionalität einer Vielzahl von bereits verbauten, vorgefertigten Wandelementen hinterlegt ist, insbesondere in Bezug auf deren Leistungsfähigkeit von mindestens einem über einen bestimmten Zeitraum hinweg gemessenen Parameter, wobei die Datenbank darüber hinaus zu einem jeweiligen verbauten Wandelement weitere Informationen aufweist, vorzugsweise solche, die den Standort eines jeweiligen verbauten Wandelements, den Energieverbrauch eines jeweiligen verbauten Wandelements und/oder eine spezifische verwendete Konfiguration eines jeweiligen verbauten Wandelements betreffen, und eine Recheneinheit vorgesehen ist, die dazu ausgelegt ist, einen digitalen Zwilling eines potentiell zu sanierenden Gebäudes unter Hinzuziehung der in der Datenbank abgelegten Informationen über vorgefertigte Wandelemente zu simulieren, und mindestens ein optimales, vorgefertigtes Wandelement für ein zu sanierendes Gebäude auf Grundlage der in der Datenbank hinterlegten Informationen zu wählen, wobei Gebäudedaten des zu sanierenden Gebäudes, insbesondere Standort, Ausrichtung oder dergleichen, bei der Auswahl eines Wandelements durch die Recheneinheit berücksichtigt werden.

In dem das erfindungsgemäße System auf die Daten bereits verbauter Wandelemente oder dergleichen aus früheren Sanierungen zurückgreifen kann, ist es möglich, einen digitalen Zwilling eines potentiell zu sanierenden Gebäudes zu erstellen und mit Typen von Wandelementen zu sanieren, deren Leistungsfähigkeit bereits in der Praxis nachvollzogen worden ist. Durch eine solche Gebäudesimulation kann eine mögliche Effizienz einer Sanierung und Heranziehung vorgefertigter Wandelemente abgeschätzt werden, was auch die Auswahl und die Sinnhaftigkeit einer Sanierung eines potentiell zu sanierenden Gebäudes erheblich vereinfacht.

Nach einer weiteren Fortbildung der Erfindung kann vorgesehen sein, dass aus dem digitalen Zwilling alle relevanten Gebäudedaten in einem standardisierten Datensatz extrahiert werden können. Komplexe Berechnungen ermöglichen es dann, optimale oder mehrere sehr gute Konfigurationen aus Baustoffen, Wandelementen, anderen Bauelementen und Bauverfahren zu ermitteln. Hierbei sind zahlreiche Annahmen zu treffen, die nach der Fertigstellung des Baus mittels vernetzter Energieverbrauchs- und Sensordaten überprüft werden können. Aufgrund der oft komplexen oder unbekannten Zusammenhänge zwischen Annahmen und Messergebnissen ist hier der Einsatz eines lernfähigen KI-Systems von Vorteil, das die Annahmen für die Konfigurationsberechnungen sukzessive optimiert.

Wenn umfassende Gebäudedaten aus bereits fertig gestellten Sanierungen gesammelt wurden, ermöglicht die Erstellung eines digitalen Zwillings zahlreiche Vorteile, wie die Simulation von Windlasten oder Sonneneinstrahlung durch die Recheneinheit. Hierbei ist das Versehen der Recheneinheit mit einer künstlichen Intelligenz besonders nützlich, um die Daten aus verschiedenen Quellen wie 3D-Scans, Drohnen-Kameraaufnahmen oder OCR-extrahierte Textinformationen aus Plänen zu verdichten und auf Plausibilität zu prüfen.

Dabei kann auch vorgesehen sein, dass die künstliche Intelligenz ferner dazu ausgelegt ist, eine Maßzahl für eine voraussichtliche Güte einer Sanierung des zu sanierenden Gebäudes unter Verwendung des mindestens einen vorgefertigten Wandelements anzugeben.

Dies ist insbesondere hilfreich, wenn eine Vielzahl von potentiell zu sanierenden Gebäuden vorliegt, und man bestimmen möchte, bei welchen der mehreren potentiell zu sanierenden Gebäuden eine energetische Sanierung unter Nutzung der Wandelemente den größten Effekt mit sich bringen würde. Man kann so die Auswahl eines zu sanierenden Gebäudes vereinfachen, da man sehr gut abschätzen kann, bei welchem Gebäude die serielle Sanierung die besten Effekte erzielen würde.

Dabei kann also ferner vorgesehen sein, dass die Recheneinheit mit einer künstlichen Intelligenz ausgestattet ist, die die auf der Datenbank abgelegten Datenmengen auswertet und bspw. ein für das zu sanierende Gebäude zu wählendes Wandelement vorschlägt.

Zudem kann vorgesehen sein, dass mit einer auf das Objekt genau abgestimmten Bauvariante, die vorzugsweise ein wie oben beschrieben ausgewähltes Wandelement umfasst oder aus diesen besteht, eine erste, wenn auch grobe, Preiskalkulation erstellt werden kann. Diese Kalkulation wird durch Faktoren wie Sicherheitsaufschläge, einkaufsbedingte Preisnachlässe und Fördermöglichkeiten komplex und unvorhersehbar. Auch hier kann ein KI-System vorteilhaft sein, indem es die Endpreise einzelner Leistungspositionen vorhersagt und mit den bestehenden Unsicherheiten bestmöglich umgeht.

Nach einer weiteren optionalen Modifikation der vorliegenden Erfindung kann vorgesehen sein, dass die Recheneinheit dazu ausgelegt ist, die Effizienz eines vorgegebenen Wandelements oder einer Vielzahl von vorgegebenen Wandelementen für das zu sanierende Gebäude abzuschätzen.

Vorteilhafterweise kann für das Abschätzen der Effizienz die künstliche Intelligenz der Recheneinheit verwendet wird.

Die künstliche Intelligenz wird dabei mit den Erfahrungswerten der vorhergehenden umgesetzten Sanierungen von Gebäuden trainiert, wobei insbesondere auf die Leistungsfähigkeit eines in einem früheren Gebäude verbauten Wandelements abgestellt werden kann. Im Zusammenspiel mit weiteren Informationen über das Gebäude, in welchem das frühere Wandelement verbaut worden ist, kann die Leistungsfähigkeit des darin verbauten Wandelements dann mithilfe einer künstlichen Intelligenz abgeschätzt werden und in Erfahrung gebracht werden, ob sich hieraus Rückschlüsse für ein angedachtes Sanierungsobjekt ziehen lassen. So kann mithilfe der künstlichen Intelligenz deutlich besser abgeschätzt werden, ob die technische und auch die wirtschaftliche Sinnhaftigkeit eines geplanten Sanierungsobjekts die gewünschten Anforderungen erfüllt oder nicht. Dies ermöglicht auch die gezielte Auswahl zwischen einer Vielzahl von möglichen Sanierungsobjekten, da bereits im Vorfeld abgeschätzt werden kann, ob eine angedachte Sanierung die gewünschten vorteilhaften Effekte mit sich bringen wird.

Ferner kann vorgesehen sein, dass die durch die Recheneinheit erfolgte Auswertung für präzise Voraussagen in Bezug auf die Sinnhaftigkeit eines Wandelements bei einem zu sanierenden Gebäude nutzbar ist.

Nach einer weiteren optionalen Modifikation der vorliegenden Erfindung kann vorgesehen sein, dass die durch die Recheneinheit erfolgte Auswertung zur Auswahl eines Wandelements für eine Vielzahl unterschiedlicher zu sanierender Gebäude durchführbar ist, um ein potentiell zu sanierendes Gebäude zu bestimmen, welches mit mindestens einem Wandelement effizient und kostensparend verbesserbar ist.

Vorteilhafterweise kann vorgesehen sein, dass die in der Datenbank abgelegten weiteren Informationen zu einem Wandelement die Orientierung des Wandelements bezüglich der Himmelsrichtungen, die geographische Lage des Wandelements sowie der zu der geographischen Lage zugehörigen Klimazone, die Höhe über Normalnull und/oder der Grundriss des mit dem Wandelement gebauten Gebäudes umfasst.

All diese Daten können durch die Recheneinheit, welche durch eine künstliche Intelligenz umgesetzt sein kann, herangezogen werden, um Rückschlüsse auf die prognostizierte Leistungsfähigkeit eines Wandelements in einem zu sanierenden Gebäude zu ziehen.

Das erfindungsgemäße System ermöglicht also die automatisierte, KI-gestützte Objektauswahl von potentiell zu sanierenden Gebäuden und kann hierbei mithilfe einer Gebäudesimulation auf Grundlage eines digitalen Zwillings bereits in einem sehr frühen Stadium abschätzen, ob eine energetische Sanierung eines Gebäudes sinnhaft ist oder nicht.

Ferner kann auf Grundlage der Daten, welche bereits in abgeschlossenen Sanierungen gewonnen worden sind, eine bestmögliche Komponentenauslegung für eine noch durchzuführende Sanierung erfolgen, wobei hier auch auf Machine-Learning-Algorithmen oder künstliche Intelligenz zurückgegriffen werden kann.

Nach einer weiteren Fortbildung der vorliegenden Erfindung kann vorgesehen sein, dass eine Funktionsüberwachungseinheit vorgesehen ist, um eine Leistungsfähigkeit eines verbauten Wandelements zu überprüfen, wobei die Recheneinheit dazu ausgelegt ist, eine bauphysikalische Funktion anhand von einem an dem mindestens einem Wandelement gemessenen Parameter zu überwachen, und die Recheneinheit ferner dazu ausgelegt ist, die bauphysikalische Funktion des mindestens einen Wandelements kontinuierlich zu überwachen, insbesondere für einen Zeitraum von mindestens drei, vorzugsweise mindestens fünf und bevorzugterweise mindestens sieben Jahren.

Durch das Vorsehen der Recheneinheit wird die Möglichkeit einer kontinuierlichen Überwachung des verbauten Wandelements in Bezug auf seine Effizienz oder damit in Verbindung stehende Parameter geschaffen, wodurch eine spätere Beurteilung der Sinnhaftigkeit eines Verbauens dieses verbauten Wandelements in dem spezifischen Gebäude durchgeführt werden kann und auch eine Ableitung möglich ist, ob ein Verbauen eines solchen Elements in einem ähnlichen oder anderem Gebäude sinnvoll ist. Eine kontinuierliche Messung bedeutet dabei nicht, dass fortwährend ununterbrochen gemessen wird, sondern dass die einzelnen Messereignisse intervallartig jedoch über einen längeren Zeitraum stattfinden.

Dabei wird über einen längeren Zeitraum mindestens ein Parameter des Wandelements gemessen, sodass die Leistungsfähigkeit des Wandelements über den längeren Zeitraum bestimmt werden kann.

Die Überwachung des mindestens einen Parameters kann dabei durch einen in das Wandelement eingebauten Sensor erfolgen, wobei dem Fachmann aber klar ist, dass nach dem Grundgedanken der Erfindung auch ein manuelles Bestimmen des Parameterwerts und ein händisches Übertragen zum Bereitstellen an die Recheneinheit ebenfalls möglich ist.

Nach einer vorteilhaften Modifikation der Erfindung kann vorgesehen sein, dass das System ferner einen Sensor zum Messen des Parameters an dem mindestens einem verbauten Wandelement umfasst, wobei der Sensor mit der Recheneinheit verbunden ist, um einen gemessenen Parameterwert an diese zu übertragen, vorzugsweise wobei der Sensor dazu ausgelegt ist, die Innentemperatur, die Außentemperatur, die Innenfeuchte und/oder die Außenfeuchte zu bestimmen.

Durch das Vorsehen eines Sensors in dem Wandelement wird das Bestimmen eines Parameterwerts eines Parameters automatisiert durchgeführt, was das in Intervallen durchgeführte kontinuierliche Messen des Parameterwerts vereinfacht, da ein händisches Bestimmen nicht erforderlich ist. Als mögliche Parameter des Wandelements wird die Temperatur des Wandelements an einer dem Gebäude abgewandten Seite (Außentemperatur) und einer dem Gebäudeinneren zugewandten Seite (Innentemperatur) des Wandelements angeführt. Analog dazu können auch die Parameterwerte für die Feuchtigkeit, also die Innenfeuchte und die Außenfeuchte, bestimmt werden. Diese lassen einen Rückschluss auf die Leistungsfähigkeit des Wandelements in Bezug auf die Temperaturdämmung bzw. die durch das Wandelement erzeugte Feuchtigkeitssperre zu.

Nach einer optionalen Fortbildung der vorliegenden Erfindung kann vorgesehen sein, dass der Sensor drahtlos mit der Recheneinheit verbunden ist, insbesondere über WLAN, Bluetooth, Infrarot, ZigBee oder Funk.

Eine drahtlose Verbindung des Sensors mit der Recheneinheit ist von Vorteil, da der Aufwand zur Verkabelung des in dem Wandelement verbauten Sensors mit der Recheneinheit entfällt. Darüber hinaus können so auch deutlich einfacher eine Vielzahl von in unterschiedlichen Wandelementen verbauten Sensoren mit einer gemeinsamen Recheneinheit kommunizieren. Zudem ist der Austausch von Wandelementen oder Sensoren in den Wandelementen einfacher möglich.

Vorteilhafterweise kann dabei vorgesehen sein, dass der Sensor derart in dem Wandelement verbaut ist, dass dieser sich über die gesamte Dickenrichtung des Wandelements von einer ersten flächigen Seite des Wandelements zu einer zweiten flächigen Seite des Wandelements erstreckt.

Indem der Sensor sich entlang der gesamten Dickenrichtung des Wandelements erstreckt, kann auf einfache Art und Weise an der Außenseite bzw. der Innenseite des Wandelements ein Feuchtigkeitswert oder ein Temperaturwert bestimmt werden.

Dabei kann ferner vorgesehen sein, dass der Sensor einen röhrenförmigen Abschnitt besitzt, der sich von einer ersten flächigen Seite des Wandelements zu einer zweiten flächigen Seite des Wandelements erstreckt und wobei ein jedes der beiden Enden mit einer jeweiligen Membran verschlossen ist, vorzugsweise wobei jede der beiden Membranen etwa bündig mit der entsprechenden flächigen Seite des Wandelements angeordnet ist. Die Membran dient als Schutz, ist aber permeabel für Temperatur und Feuchtigkeit.

Ferner kann in einem zwischen den beiden Membranen befindlichen Mittenbereich des röhrenförmigen Abschnitts ein Isolator vorgesehen ist, der den röhrenförmigen Abschnitt in zwei voneinander separate Bereiche unterteilt, vorzugsweise wobei die beiden voneinander getrennten Bereiche durch den Isolator in Bezug auf Temperatur und Feuchtigkeit voneinander getrennt sind, um verschiedene Temperaturbereiche oder Feuchtigkeitsbereiche zu bilden.

Nach einer weiteren Fortbildung des Sensors kann in dem röhrenförmigen Abschnitt ein Kommunikationsmodul zum Aufbauen einer drahtlosen Verbindung mit der Recheneinheit angeordnet sein.

Nach einer weiteren optionalen Fortbildung der vorliegenden Erfindung kann vorgesehen sein, dass der Sensor mit einer an einer Außenseite des Wandelements angeordneten Solarzelle verbunden ist, um von dieser seine elektrische Leistung zu beziehen.

Diese Umsetzung ist besonders vorteilhaft, da der in dem Wandelement verbaute Sensor keine externe Stromzufuhr benötigt, sondern die von ihm benötigte Energie über die Solarzelle bezieht. Der in dem Wandelement verbaute Sensor ist demnach autark und funktioniert demnach auch ohne die Zufuhr einer externen Energie.

Weitere Merkmale, Einzelheiten und Vorteile der Erfindung werden anhand der nachfolgenden Figurenbeschreibung ersichtlich. Dabei zeigen:
- Fig. 1:: eine Ansicht eines in ein Wandelement verbaubaren Sensors von schräg oben,
- Fig. 2:: eine Ansicht eines erfindungsgemäßen Wandelements mit einem darin verbauten Sensors,

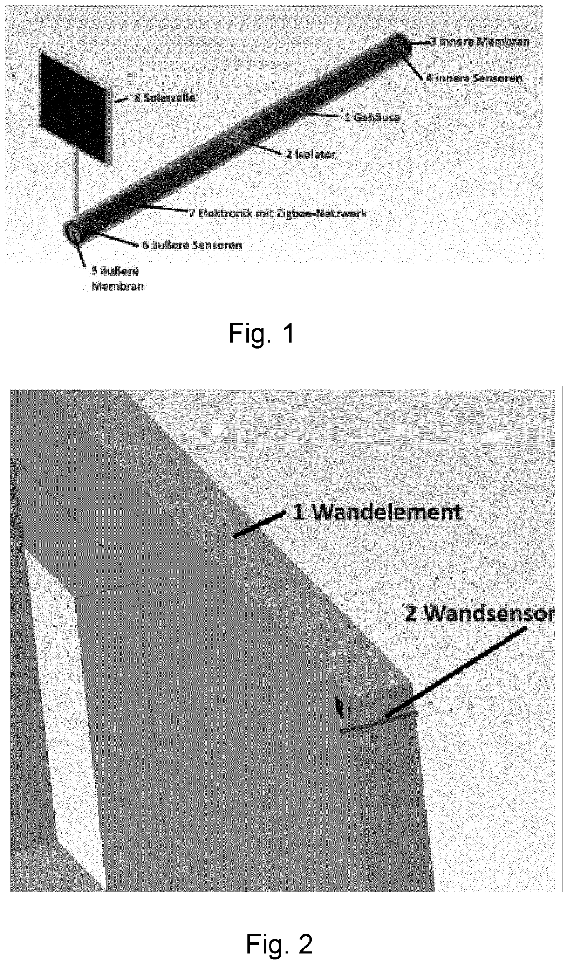

Fig. 1 zeigt einen Sensor 20, der über ein Gehäuse 1 verfügt, welches stabartig ausgebildet ist. Das Gehäuse ist dabei hohl ausgeformt, sodass es in seinem Inneren weitere Komponenten des Sensors 20 aufnehmen kann.

In der dargestellten Ausführungsform ist der Querschnitt des Gehäuses 1 senkrecht zu seiner Längsachse kreisförmig, sodass sich ein Grundaufbau des Gehäuses 1 ergibt, der einem Zylindermantel entspricht. An seinem beiden gegenüberliegenden Endabschnitten besitzt das Gehäuse jeweils eine Membran 3, 5 die das Innere des Gehäuses gegenüber einem Äußeren abschließt. Je nach Orientierung des Sensors 20 in dem Wandelement wird eine der beiden Membranen 3, 5 als äußere Membran 5 und die andere der beiden Membranen 3, 5 als innere Membran 3 bezeichnet.

Um nun bspw. eine Veränderung der Feuchtigkeit oder der Temperatur zu bestimmen, ist an der zum Inneren des Sensors 20 gewandten Seite einer jeweiligen Membran 3, 5 mindestens ein Sensor 4, 6 angeordnet, um die Feuchtigkeit und/oder die Temperatur zu bestimmen. Die Membran 3, 5 hat dabei eine Schutzwirkung, um die im Inneren des Sensors 20 bzw. die in dem Gehäuse 1 angeordneten Komponenten des Sensors 20 vor Umwelteinflüssen, wie Staub oder dergleichen, zu schützen. Die Membran 3, 5 ist dabei aber so ausgestaltet, dass die an der Innenseite der jeweiligen Membran angeordneten Sensoren 4, 6 dazu in der Lage sind, einen durch die Sensoren bestimmbaren Parameter zu bestimmen. Bspw. kann durch einen im Inneren des Sensors 20 angeordneten Temperatursensor die Temperatur bestimmt werden, wie sie an der Außenseite der Membran vorherrscht. Selbiges gilt für die Feuchtigkeit.

Um nun zu verhindern, dass bspw. ein geringer Temperaturwert an einem Ende des Sensors im Bereich einer ersten Membran 3 einen Temperaturwert im Bereich der zweiten Membran 5 beeinflusst, ist in einem Mittenbereich der Längsrichtung des Gehäuses 1 des Sensors 20 ein Isolator 2 vorgesehen, welcher das Weiterleiten einer Temperatur in Richtung einer ersten Membran 3 hin zu einer zweiten Membran 5 und umgekehrt unterbindet.

Darüber hinaus kann in dem durch das Gehäuse 1 geschaffenen Bereich auch die Elektronik bspw. in Form eines Kommunikationsmoduls 7 zum Übertragen der gemessenen Parameterwerte an die Recheneinheit vorgesehen sein.

Vorteilhafterweise kann dies dabei durch eine drahtlose Übertragung umgesetzt sein, sodass eine Verkabelung mit einer Recheneinheit nicht erforderlich ist.

Weiter erkennt man, dass eine Solarzelle 8 vorgesehen ist, über die die in dem Sensor 20 verbaute Elektronik ihre elektrische Leistung bezieht.

Dabei kann vorgesehen sein, dass die Solarzelle 8 an der Außenwand der desjenigen Wandelements vorgesehen ist, in welchem der Sensor 20 verbaut ist. Alternativ dazu kann aber auch eine Orientierung vorgesehen sein, wonach die Solarzelle an der Innenseite des Wandelements angebracht ist. Die Erzeugung der elektrischen Energie zum Betätigen des Sensors muss demnach also nicht mittels Sonneneinstrahlung, sondern kann auch durch die Innenbeleuchtung eines Gebäudes erfolgen.

Figur 2 zeigt eine Schnittansicht eines erfindungsgemäßen Wandelements 10, indem der Wandsensor 20 verbaut ist. Man erkennt hier, dass sich der Wandsensor 20 entlang der gesamten Dickenrichtung des Wandelements 10 erstreckt. Ferner ist die Solarzelle 8 außen an einer flächigen Seite des Wandelements 10 angeordnet, sodass auf das Wandelement 10 einstrahlende Lichtenergie in elektrische Energie umgewandelt werden kann, um zum Betrieb des Sensors 20 verwendet zu werden.

### Bezugszeichenliste:

- 1: Gehäuse
- 2: Isolator
- 3: innere Membran
- 4: innere Sensoren
- 5: äußere Membran
- 6: äußere Sensoren
- 7: Kommunikationsmodul
- 8: Solarzelle
- 10: Wandelement
- 20: Sensor

## Patentansprüche

1. System zur Auswahl eines vorgefertigten Wandelements auf Grundlage einer überwachten Funktionalität verbauter vorgefertigter Wandelemente zur Nutzung im Rahmen einer seriellen Sanierung, umfassend:
eine Datenbank, in welcher die Funktionalität einer Vielzahl von bereits verbauten, vorgefertigten Wandelementen hinterlegt ist, insbesondere in Bezug auf deren Leistungsfähigkeit von mindestens einem über einen bestimmten Zeitraum hinweg gemessenen Parameter, wobei
die Datenbank darüber hinaus zu einem jeweiligen verbauten Wandelement weitere Informationen aufweist, vorzugsweise solche, die den Standort eines jeweiligen verbauten Wandelements, den Energieverbrauch eines jeweiligen verbauten Wandelements und/oder eine spezifische verwendete Konfiguration eines jeweiligen verbauten Wandelements betreffen, und
eine Recheneinheit vorgesehen ist, die dazu ausgelegt ist,
einen digitalen Zwilling eines potentiell zu sanierenden Gebäudes unter Hinzuziehung der in der Datenbank abgelegten Informationen über vorgefertigte Wandelemente zu simulieren, und
mindestens ein optimales, vorgefertigtes Wandelement für ein zu sanierendes Gebäude auf Grundlage der in der Datenbank hinterlegten Informationen zu wählen, wobei Gebäudedaten des zu sanierenden Gebäudes, insbesondere Standort, Ausrichtung oder dergleichen, bei der Auswahl eines Wandelements durch die Recheneinheit berücksichtigt werden.

2. System nach dem vorhergehenden Anspruch 1, wobei
die Recheneinheit mit einer künstlichen Intelligenz ausgestattet ist, die die in der Datenbank abgelegten Informationen auswertet und mindestens ein für das potentiell zu sanierende Gebäude zu wählendes Wandelement vorschlägt, vorzugsweise wobei
die künstliche Intelligenz ferner dazu ausgelegt ist, eine Maßzahl für eine voraussichtliche Güte einer Sanierung des zu sanierenden Gebäudes unter Verwendung des mindestens einen vorgefertigten Wandelements anzugeben.

3. System nach einem der vorhergehenden Ansprüche, wobei die Recheneinheit dazu ausgelegt ist, die Effizienz eines vorgegebenen Wandelements oder einer Vielzahl von vorgegebenen Wandelementen für das zu sanierende Gebäude abzuschätzen.

4. System nach dem vorhergehenden Anspruch, wobei für das Abschätzen der Effizienz die künstliche Intelligenz der Recheneinheit verwendet wird.

5. System nach einem der vorhergehenden Ansprüche, wobei die durch die Recheneinheit erfolgte Auswertung zum Bestimmen von mindestens einem optimalen vorgefertigten Wandelement für eine Vielzahl unterschiedlicher potentiell zu sanierender Gebäude durchführbar ist, um mindestens ein potentiell zu sanierendes Gebäude zu bestimmen, welches unter Verwendung des vorgefertigten Wandelements besonders effizient und kostensparend verbesserbar ist.

6. System nach einem der vorhergehenden Ansprüche, wobei die in der Datenbank abgelegten weiteren Informationen zu einem verbauten, vorgefertigten Wandelement die Orientierung des verbauten Wandelements bezüglich der Himmelsrichtungen, die geographische Lage des verbauten Wandelements sowie der zu der geographischen Lage zugehörigen Klimazone, die Höhe über Normalnull und/oder der Grundriss des mit dem verbauten Wandelement gebauten Gebäudes umfasst.

7. System nach einem der vorhergehenden Ansprüche, ferner umfassend eine Funktionsüberwachungseinheit zum Überprüfen einer Leistungsfähigkeit eines verbauten Wandelements, das Teil eines Gebäudes, insbesondere eines Hauses oder dergleichen, ist, wobei
die Recheneinheit dazu ausgelegt ist, eine bauphysikalische Funktion anhand von einem an dem mindestens einem verbauten Wandelement gemessenen Parameter zu überwachen, und
die Recheneinheit ferner dazu ausgelegt ist, die bauphysikalische Funktion des mindestens einen verbauten Wandelements kontinuierlich zu überwachen, insbesondere für einen Zeitraum von mindestens drei, vorzugsweise mindestens fünf und bevorzugterweise mindestens sieben Jahren.

8. System nach dem vorhergehenden Anspruch, ferner umfassend einen Sensor zum Messen des Parameters an dem mindestens einem verbauten Wandelement, wobei der Sensor mit der Recheneinheit verbunden ist, um einen gemessenen Parameterwert an diese zu übertragen, vorzugsweise wobei der Sensor dazu ausgelegt ist, die Innentemperatur, die Außentemperatur, die Innenfeuchte und/oder die Außenfeuchte zu bestimmen.

9. System nach dem vorhergehenden Anspruch, wobei der Sensor drahtlos mit der Recheneinheit verbunden ist, insbesondere über WLAN, Bluetooth, Infrarot, ZigBee oder Funk.

10. System nach einem der vorhergehenden Ansprüche 8 oder 9, wobei der Sensor derart in dem Wandelement verbaut ist, dass der Sensor sich über die gesamte Dickenrichtung des Wandelements von einer ersten flächigen Seite des Wandelements zu einer zweiten flächigen Seite des Wandelements erstreckt.

11. System nach dem vorhergehenden Anspruch, wobei der Sensor einen röhrenförmigen Abschnitt besitzt, der sich von einer ersten flächigen Seite des Wandelements zu einer zweiten flächigen Seite des Wandelements erstreckt und wobei ein jedes der beiden Enden mit einer jeweiligen Membran verschlossen ist, deren jeweilige Verformung durch einen zugehörigen Sensor erfassbar ist, vorzugsweise wobei jede der beiden Membranen etwa bündig mit der entsprechenden flächigen Seite des Wandelements angeordnet ist.

12. System nach dem vorhergehenden Anspruch, wobei in einem zwischen den beiden Membranen befindlichen Mittenbereich des röhrenförmigen Abschnitts ein Isolator vorgesehen ist, der den röhrenförmigen Abschnitt in zwei voneinander separate Bereiche unterteilt, vorzugsweise wobei die beiden voneinander getrennten Bereiche durch den Isolator fluidisch voneinander getrennt sind, um verschiedene Druckbereiche zu bilden.

13. System nach einem der vorhergehenden Ansprüche 10-12, fortgebildet mit den Merkmalen des Anspruchs 9, wobei in dem röhrenförmigen Abschnitt ein Kommunikationsmodul zum Aufbauen einer drahtlosen Verbindung mit der Recheneinheit angeordnet ist.

14. System nach einem der vorhergehenden Ansprüche 9-13, wobei der Sensor mit einer an einer Außenseite des Wandelements angeordneten Solarzelle verbunden ist, um von dieser seine elektrische Leistung zu beziehen.
